# EUROPEAN PATENT APPLICATION

(11) **EP 2 869 608 A1**
(43) Date of publication of application: **06.05.2015**
(21) Application number: 13460072.5
(22) Date of filing: 30.10.2013
(51) Int. Cl.: H04W 4/14, H04L 12/58, H04W 24/00

(54) **A communication system for exchange of messages between one or more mobile operators and at least one traffic operator**

(71) Applicant: Callfreedom Sp. z o.o., 85-109 Bydgoszcz (PL); Instytut Logistyki i Magazynowania, 61-755 Poznan (PL)
(72) Inventor: Vyacheslav, Krantovskiy, 86-032 Niemcz (PL); Marcin, Hajdul, 60-688 Poznan (PL)

(57) **Abstract**

A communication system for exchange of messages between one or more mobile operators and at least one traffic operator is characterised in that it contains at least one traffic operator station (TOS1, TOS2...), and at least one mobile operator station (MOS1, MOS2...), both provided with means for sending and/or receiving data with use of USSD protocol. All traffic/mobile operator stations are provided with means for processing of information carried in USSD-compliant messages. They exchange the USSD messages through the cellular network with any standard supporting USSD protocol. The mobile operator station which can be any mobile electronic device provided with a SIM card or circuit and a modem, is provided with the receiver of the geographic positioning signal. At least one sensor of a physical variable and optionally a bar/matrix code reader are connected to the mobile operator station, either remotely or by wire.

## Description

The subject of the invention is a communication system for exchange of messages between one or more mobile operators and at least one traffic operator. In particular this invention can be applied for a delay-free exchange of messages between the dispatcher supported with his information system, and the truck drivers, provided with suitable mobile communication devices.

Many attempts have been undertaken to develop various modes of communication between a remote station and a network. Of particular interest are those that make use of the Unstructured Supplementary Service Data (USSD) protocol, because this protocol is based on a principle of immediate delivery of a message to the recipient. The USSD protocol is a communication technology broadly used to send text messages between a mobile phone and an application program in a computer in the cellular network. It provides session-based communication in which transactions occur only during a session.

International patent application WO2010146541 A1 (Staykoff C., 23.12.2010) discloses generic smart USSD client module embarked in a telecommunication terminal. This invention relates to a telecommunication digital client system for using digital applications and services, that is based on at least one USSD protocol or client protocol and is located in at least one mobile terminal. The USSD client includes means for receiving and construing at least one piece of data and/or one instruction from at least one telecommunication network, means for text and/or graphic display on a screen, and for presenting on said mobile terminal at least one piece of data and/or one instruction from said communication network, means for construing and sending back to said network at least one request and/or at least one message of at least one user based on at least one piece of data and/or at least one service presented, and means for communicating with at least one server of at least one third party of any USSD server type, of an embarked portal server type or else. The USSD client includes at least one transport-layer module that comprises at least one encryption module, at least one construing decoding module and at least one presentation module. It also comprises at least one navigation module.

Another international patent application WO2007134689 A1 (Fiorini N., 29.11.2007) discloses a method and apparatus for delivering advertisements to mobile users, also with USSD protocol applied. This invention contemplates a variety of techniques for delivering advertisements and similar promotional messages to mobile users through the USSD bearer in the Global System for Mobile (GSM) network or the 3G (3rd Generation) network. Advertisements delivered through USSD provide a way for the recipient to respond to the promotional message immediately. Described invention allows advertisements to be delivered through USSD in several ways: by inserting a short text into a message in a mobile-initiated USSD session, by temporarily diverting a mobile-initiated USSD session toward an advertisement sub-session, by triggering a network-initiated USSD session the main purpose of which is the delivery of an advertisement, and by causing a mobile user to initiate a USSD session the main purpose of which is the delivery of an advertisement. This invention discloses a process for inserting advertisements into USSD messages, a process for inserting advertisement sub-sessions into USSD sessions, and a process for delivering advertisements with network-initiated USSD sessions.

Different use of USSD protocol is described in American patent application US2005164713 A1 (Tang-Taye J., 28.07.2005) which discloses assisted location through the establishing of a cellular network mobile communication terminal USSD transport channel, for a call centre. Proposed communication system consists of a cellular communication network, a satellite positioning network coupled to an assistance data server, which itself is coupled to the cellular network, and mobile communication terminals coupled to the cellular network and comprising a satellite assisted positioning device coupled to the positioning network and the server. The mobile terminals also incorporate USSD type data management means, able to establish USSD type data transport channels, with the server, and processing means responsible, when they detect the dialing by one of the mobile terminals of a selected call number designating a call center, for coupling the USSD type data management means to the device. At this moment they establish a USSD type data transport channel between the device and the server, such that the latter cooperates with the device to obtain the position of the calling terminal. Furthermore, the call centre is responsible, if it judges it necessary to locate the calling terminal, for transmitting to the server a request asking it to provide the position of the calling terminal once it has obtained it.

In closely related American patent application of the same author US2005164714 A1 (Tang-Taye J., 28.07.2005) assisted method of locating mobile communications terminals of a cellular network using a USSD transport channel is disclosed. According to this invention a mobile communications terminal for a cellular communications network comprises i) an assisted satellite positioning device connected to a satellite positioning installation connected to an assistance data server, ii) USSD management means for setting up USSD transport channels, and iii) processing means for coupling the management to the device on request in order for a USSD transport channel to be set up between said device and a location management equipment of the cellular network connected to the assistance data server. The USSD channel is then used to send the device assistance data representative of identifiers of at least three satellites visible in the cell in which the terminal is situated so that it can lock onto said satellites to estimate at least the distances between them and its terminal.

A method to transmit positions relating to a mobile object, also applying USSD technology is disclosed in European patent application EP1389881 A1 (Berg A., Moneke K., 18.02.2004). A moving object location transmission system for goods wagons sends the Global Positioning System (GPS) or network location data such as terminal number, zone and cell identity data as a USSD string in a mobile call from a mobile terminal to the intelligent network control node which releases the call and sends the location information to a computer.

Alternative use of Short Message Service (SMS) and USSD protocol is proposed in international patent application WO9736437 A1 (Mills J., 02.10.1997) for remotely retrieving SIM-stored data over a connectionless communications link. An SMS or USSD message encapsulating a request for Subscriber Identity Module (SIM) stored data is transported to the mobile station over a connectionless communications link such as a Stand-alone Dedicated Control Channel (SDCCH). An application module within the mobile station having access to the SIM card receives the request signal, retrieves the requested information from the SIM card, and re-transmits it back to the requesting party. In order to facilitate proper return to the requesting party, if an SMS message is used, a return address is encapsulated into the transmitted SMS message for future reference. The serving mobile switching center (MSC) receives the transmitted message encapsulating the requested subscriber data and routes the received data to the original requesting party.

Different concept of mobile telecommunications system supporting the use of 'Functional Numbers" is described in European patent application EP0952744 A2 (Joly C. et al., 27.10.1999). This invention relates to specialized mobile communication schemes such as railway-operator-consortia-managed mobile communications schemes which come under the umbrella term of GSM-Railways (GSM-R) systems. The invention seeks to define an architecture to support the use of 'Functional Numbers' for addressing purposes within a wireless communication network, and provide a method for transporting 'Functional Numbers' between the relevant wireless communication entities within the architecture. The invention also seeks to define a flexible and extendible encoding scheme for the GSM-R defined supplementary service handling operations used for registering, interrogating and deregistering 'Functional Numbers'. In addition the invention provide an extension to the way 'Functional Numbers' are registered and deregistered by providing an encoding for supervisory control of registration and deregistration procedures.

The European patent application EP2001251 A1 (Nokia Siemens Networks OY, 10.12.2008) describes an enhanced emergency call for track-based transportation systems. This invention relates to a method, network element, functional network node, terminal device, and system for handling an emergency call in a track-based transportation system. The emergency call is based on a group call service covering a predefined geographical area, which is split into at least two sectors. A sector information indicating a sector associated with the emergency call is distributed to terminal devices located within the predefined geographical area, the terminal devices controlling their emergency call processing based on the distributed sector information.

None of the above mentioned inventions solves or even suggests solution of the problem of instantaneous, i.e. realized in real-time, automatic or semi-automatic communication between two remote stations, i.e. between the station of the traffic operator, e.g. a dispatcher, and the mobile station of the mobile operator, e.g. a truck driver or a train operator. This technical problem is of great importance in logistics, transportation, organisation of public emergency services (police, emergency rescue, fire brigade, electricity/gas or public transportation services, etc.), because certainty of instantaneous delivery of messages is crucial for their tasks. The systems based on SMS suffer from uncertainty caused by unpredictable delays from the moment of the message generation to its reception. The reason is in that the SMS messages are sent to a short message service center (SMSC), which provides a "store and forward" mechanism. It attempts to send messages to the SMSC's recipients. If for example a recipient is not reachable, or the SMSC is overloaded, the SMSC queues the message for later retry. Some SMSCs also provide a "forward and forget" option where transmission is tried only once. While resulting delay of few seconds may be of minor importance, the delays of hours or days, or loosing the message in "forward and forget" option make the whole system practically useless for applications demanding high certainty of the message quick delivery.

Proposed invention is based on exchange of messages with use of USSD protocol. This protocol has been developed for use in cellular networks to communicate with the computers of the service provider. Unlike the SMS messages which are the subject of unpredictable delays, the USSD messaging is based on a principle of creation of a real-time connection during the USSD session. The connection remains open, allowing a two-way exchange of a sequence of data (strings of characters). This makes USSD more responsive than services that use SMS. In particular, reception of the message can be immediately and automatically confirmed in a feedback USSD message.

The core of proposed invention is to extend the use of this virtue of real-time connection from exchange of the USSD messages between the mobile station and the cellular network to exchange of the USSD-compliant messages between two stations linked by the provider of USSD protocol. This provider of wireless communications services is commonly described as mobile virtual network operator (MVNO). The MVNO does not necessarily own the wireless network infrastructure over which the MVNO provides services to its customers.

A communication system for exchange of messages between one or more mobile operators and a traffic operator, according to the invention is characterised in that it contains at least one traffic operator station (TOS1, TOS2...) provided with means for sending and/or receiving data with use of USSD protocol, and at least one mobile operator station (MOS1, MOS2...) provided with means for sending and/or receiving data with use of USSD protocol, and where each traffic operator station and each mobile operator station are provided with means for generation, reception, processing and visualisation of information carried in pre-defined sub-strings of characters contained in the strings of characters that constitute the USSD-compliant messages. The pre-defined sub-strings may contain information about e.g. identification number (ID) of the station, its geographical position, temperature or humidity of the load, work parameters of the engine, etc. They may also contain information of actual status (loaded, unloaded, damage of the load, short or long break in drive, etc.) or commands from the traffic operator to the mobile operator. A dedicated sub-string may link the USSD message with additional SMS or MMS message.

In the proposed system each traffic operator station and each mobile operator station are provided with means for selection of the recipient of the USSD-compliant message from the list of the traffic operator stations and the mobile operator stations. Usually the mobile operator is expected to send messages only to the traffic operator, however in some embodiments of the system there can be a number of traffic operators operating e.g. on defined areas. Then switching from one to another traffic operator is necessary. This switching can be done automatically when the mobile operator leaves the area covered by one traffic operator and moves to the area covered by another one. The mobile operator can also send a USSD-compliant message to other mobile operators, e.g. in emergency.

The natural environment of the system according to the invention is a cellular network supporting USSD protocol. This means, that in strongly recommended embodiment of the invention the traffic operator station and the mobile operator station exchange the USSD-compliant messages through the cellular network with implemented GSM (2G), and/or UMTS (3G) and/or LTE Advanced (4G) standard, or any other standard supporting the USSD protocol.

If the cellular network transmits messages via satellites, then the traffic operator station and the mobile operator station exchange the USSD-compliant messages through the satellite network. Alternatively, communication between both types of stations can be maintained directly through satellites, with reduced or eliminated involvement of the cellular network, if the USSD provider provides communication based on USSD protocol via satellites.

In preferred embodiment the system uses the USSD protocol supported by the cellular network, and then the mobile operator station is a mobile phone (handset), in particular a smartphone, or a notebook, or a netbook, or a tablet, or any other mobile electronic device provided with a SIM card or circuit and a modem or any other suitable electronic device controlling the SIM card or circuit. The SIM circuit is usually enveloped in the exchangeable SIM card, but it can also be directly built into the electronic SIM-controller.

In very practical application of the invented system the mobile operator station is assigned to the vehicle, e.g. a lorry, train, ship, ambulance, and the vehicle identification number, e.g. its registration number, is comprised in the USSD-compliant message sent by the mobile operator station to the traffic operator station.

In highly recommended embodiment of the invention the mobile operator station is provided with the receiver of the geographic positioning signal, i.e. consistent with e.g. Global Positioning System (GPS), GALILEO or GLONASS. Preferably this receiver is integral with the mobile operator station. The satellite positioning signal provides the mobile station with its current geographical coordinates, which can then be sent to the traffic operator in the USSD-compliant message.

Another essential feature of the proposed system is that at least one sensor of a physical variable and optionally a bar code and/or matrix (QR) code reader are connected to the mobile operator station, either remotely or by wire. The sensor of a physical variable is a humidity, and/or temperature, and/or pressure, and/or velocity, and/or acceleration, and/or light intensity, and/or door-lock, and/or fuel level, and/or engine-stop sensor, and/or any other sensor that may appear useful to realize the tasks specific for given application of the system.

For example in transportation of goods, in particular FMCG, monitoring of internal temperature of the load can be a priority, while for the remote operator of several fire brigades this is the external temperature which relates directly to safety of the firemen. Humidity is a key parameter in transportation of many goods, e.g. works of art. While monitoring of the door lock is important in transportation of any goods, it is crucial in transportation of money, confidential or secret documents, or prisoners. Together with the information of the vehicle position and the engine work, the door-lock signal can inform the operator of hijacking, so that he can immediately call local police. Numerous reported events of hijacked trucks prove this modality can be very useful. The fuel level or the engine monitoring provides the traffic operator with information of performance of the vehicle and reduces the risk of fraud (theft of fuel) or the vehicle damage.

These are only few examples illustrating great potential of the invented system. The sensors communicate, either mono- or bi-directionally, with the mobile operator station remotely or by wire, depending on which option is more convenient to realize given task. If the number of sensors is large, they can be organized in a local network with a hub which controls the sensors and communicates with the mobile operator station. Finally, this is the mobile operator station which collects all readings from the sensors and/or bar/matrix code readers, and organizes them into the USSD-compliant message, and sends this message to the traffic operator.

The bar code or matrix code readers can be used during loading and unloading, but also during the check "on the road" by authorised bodies, e.g. police, customs or the owner of the transportation enterprise.

The system can be arranged to be autonomous. Then in pre-defined temporal or spatial intervals the mobile operator station sends automatically the USSD-compliant messages to the traffic operator station. This messages contain all pre-defined information or information requested by the traffic operator in a message sent by the traffic operator station to the mobile operator station.

In the embodiment of the system the USSD-compliant message contains the geographical coordinates acquired by the mobile operator station from the geographic positioning signal receiver or from the base transceiver station (BTS) and visitor location register (VLR) of the SIM card or circuit, and optionally the values of one or more physical variables acquired by the mobile operator station from the sensors of a physical variable, and optionally the code acquired by the mobile operator station from the bar code and/or matrix code readers, as was described above.

Instead or in parallel to the automatic mode the system can work in a manual mode. Then at a moment of time chosen by the mobile operator the mobile operator station sends to the traffic operator station the USSD-compliant message containing the data describing current status of the mobile operator, the vehicle, or the load, and optionally other data, preferably sound, images or movies, preferably in MMS format. SMS messages can be added manually to the USSD-compliant message as well. However, while the USSD message reaches the recipient instantaneously, the SMS and MMS messages can be delivered with considerable delay. Therefore all key information is transferred with use of the USSD protocol.

The system can be automatically or manually controlled also on the traffic operator side. In particular, the traffic operator station sends to selected mobile operator station the USSD-compliant message, either at pre-defined time intervals, or at any moment of time selected by the traffic operator, or automatically to confirm reception of the USSD-compliant message from the mobile operator station. Depending on circumstances the communication with some of the mobile operator stations can be maintained automatically, while with other mobile operator stations can be controlled manually. The traffic operator station is usually immobile, but in some applications this can also be mobile. For example fighting a major fire on a large area the Incident Commander who in this case is the traffic operator can move from one place to another according to developments.

Efficiency of exchange of information with use of the USSD protocol requires that in the proposed system the mobile operator station and/or the traffic operator station are provided with a communication interface for generation and visualisation of the USSD-compliant messages. This communication interface has icons and buttons for generation and visualisation of information comprised in the USSD-compliant messages, in particular of current status of the vehicle and/or the load, or for switching to other statuses, or into other modes of communication, like chat, phone call, SMS or MMS.

The embodiments of the system according to the invention are illustrated on the drawings, where:

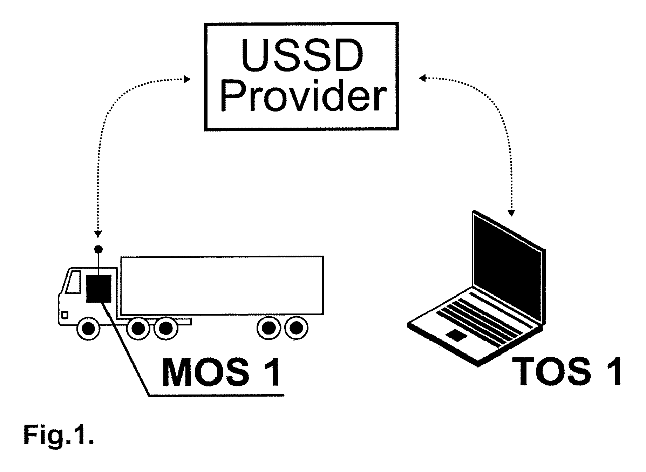

- Fig. 1 illustrates the core idea of exchange of messages between the traffic operator station and the mobile operator station via the USSD provider;

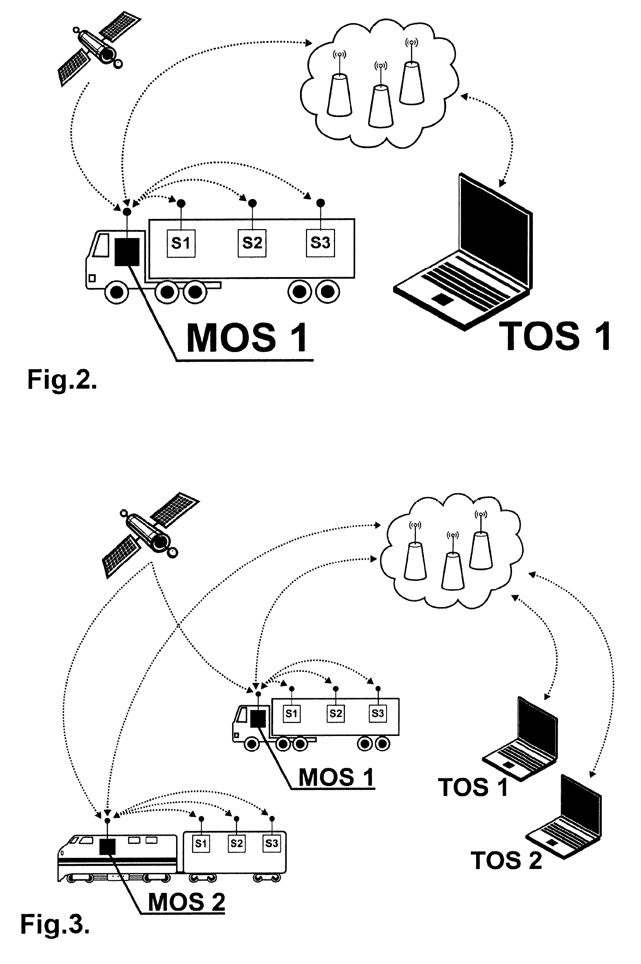

- Fig. 2 shows simplified embodiment of the system comprising one traffic operator station and one mobile operator station, the latter provided with the GPS receiver and a number of sensors, both linked by the network, e.g. a cellular network, over which the USSD provider (MVNO) provides services;
- Fig. 3 illustrates generalized system from the Fig. 2, with many traffic operator stations and many mobile operator stations which can be assigned to different kinds of vehicles, like trucks, trains, ships, containers, etc.;
- Fig. 4 shows simplified structure of the mobile operator station with external GPS receiver and internal SIM card, and the channels of particular signals;
- Fig. 5 shows simplified design of the mobile operator station interface for a smartphone.

In one of the above described embodiments the USSD-compliant message sent from the mobile operator station with SIM to the traffic operator is mediated by MVNO which transfers the original message to the recipient with additional information of position of the mobile operator station taken from BTS and VLR of the SIM. The message is delivered in real-time and a message confirming reception is sent back via MVNO.

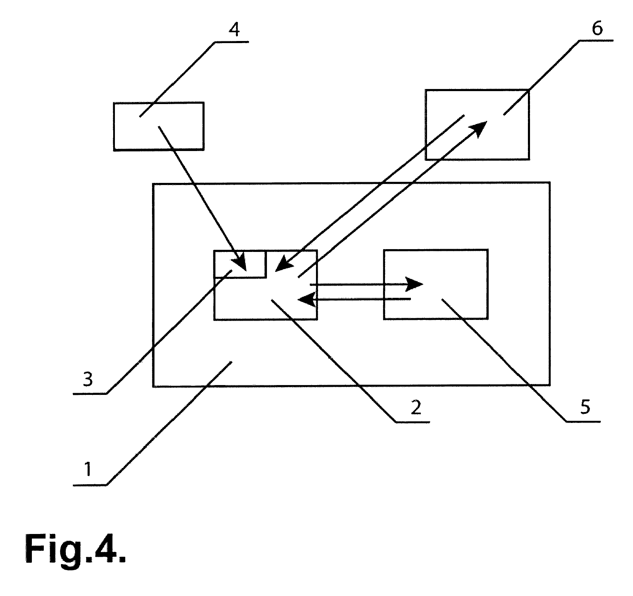

In the proposed system shown schematically in Fig. 4 the vehicle 1 is provided with the mobile operator station 2 with the SIM card. The receiver 3 of the geographic positioning signal is connected to the mobile operator station and collects the signal from the satellite 4. The sensors and/or code readers 5 are also connected to the mobile operator station which sends and receives USSD messages to/from the traffic operator station via the USSD provider 6.

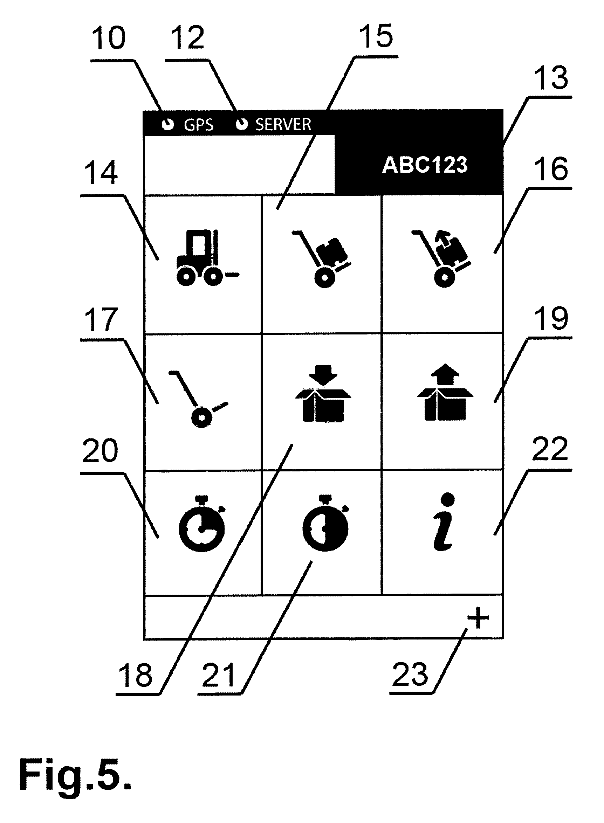

The mobile operator station has the interface facilitating operation on USSD messages. Exemplary simplified interface for the smartphone is shown in Fig. 5. The indicators GPS 11 ("sending position coordinates"), SERVER 12 ("connection to the USSD provider") and the identification symbol of the mean of transport, e.g. the vehicle registration number 13 inform the mobile operator about present state of the system. The basic statuses of the vehicle and of the load are: "ready for loading" 14, "loaded" 15, "ready for unloading" 16, "unloaded" 17, "damage during loading" 18, "damage during unloading" 19, "short break" 20, "long break" 21, "chat" 22 and button for additional statuses 23.

At first registration the vehicle is recognized through assigned SIM card. The mobile operator can use the interface of the mobile operator station to update his statuses and screen the tasks. Every status is recognized by unique "identity document" (ID) which in this embodiment is a number assigned to given status. Thus instead of sending the name of the status only this number is sent in the message. Then the information system of the traffic operator verifies this status to avoid erroneous messages. For example if the mobile operator is in status "unloaded" then the message containing the status "damage of the load" must be erroneous. In such cases the traffic operator station sends appropriate message to the mobile operator station and the mobile operator can react adequately.

In case of changes in the information system of the traffic operator that have not been initiated on the mobile operator station, suitable data are sent in the USSD message to the mobile operator station which confirms it in a feedback message. If the amount of data requires more than one message to be sent by the traffic operator, every next message is sent immediately after reception of the feedback message.

Geographical position of the mobile operator station is determined every 15 s, provided that change of position has been no less than 25 m. If this additional information of changed position is not generated during 5 minutes, e.g. because the vehicle is not moving, geographical position is not added to the message. For moving vehicle, every one minute its position is determined together with three intermediate coordinates. Each of these four sets of spatial coordinates is supplemented with precise time of the position determination and velocity calculated from spatial coordinates and time interval. Additionally the message contains information of the state of the battery and of switching-on the battery charger. In case the mobile operator station loses the GSM/UMTS signal (tunnels, network breakdown) or the operator is changed (e.g. while crossing the state border) information is stacked in the memory of the mobile operator station and sent immediately after the mobile operator station is logged back to the network.

In preferred embodiment the GPS receiver is connected to the mobile operator station. The mobile operator is not able either to modify the GPS readings or to influence transfer of these data. If the GPS-determined position is not changing, the mobile operator station sends every 5 minutes information about its inactivity to the traffic operator. This message is supplemented with additional information on the GPS status: whether it is switched-on, does it enable to determine position, what is the state of the battery and whether it is charged. This information confirms that the GPS is switched-on and ready for use, and that the mobile operator have not attempted to hold back information about his coordinates by switching-off the GPS receiver.

The bar/matrix code readers connected to the mobile operator station are used to feed the traffic operator information system with the codes of loaded or unloaded packages. This information is sent in the USSD message. Alternatively individual PIN (personal identification number) of the supplier/recipient or his signature on the touch screen can be introduced to the mobile operator station and sent in the USSD message to the traffic operator. Thus the traffic operator is provided with updated information about all packages that are on the board of the vehicle of given mobile operator. He can also authorize reception or delivery of the package or the whole load.

The sensors of various physical variables like humidity (S1), temperature (S2), door lock (S3), velocity, acceleration (in three directions), light intensity, number of engine revolutions per minute, fuel level and the like, can be connected to the mobile operator station (MOS1, MOS2) either directly or by the CAN (controller area network) bus. The connection can be wireless, e.g. WI-FI, Bluetooth, or by wire. Number of sensors is not limited. In wireless connection the readings are sent to the central unit in standards ZigBee (868 MHz) or Dash7 (433,92 MHz), or 915 MHz. These frequencies fall into the ISM (Industrial Scientific and Medical) band and are excluded from licensing in region 1 (868 MHz and 433,92 MHz) and region 2 (915 MHz) of ITU (International Telecommunication Union). Finally, the readings are sent to the traffic operator (TOS1, TOS2) in pre-defined time intervals or when preset value is reached. This enables the traffic operator to react accordingly to information obtained.

The sensors have inbuilt batteries lasting for 60 days of work if not recharged. The chargers are connected to the sensors, preferably through the USB connectors. The sensors have also inbuilt memory for storage of measurements data if transmission to the central unit is not possible at that time. The central unit has its own battery supporting the system for 24 hours if not recharged.

If the mobile operator sends the message "chat", the text of the chat is limited to 300 characters of the modified ASCII code. In this modified ASCII code the characters 0-31 were deleted and replaced by the characters numbered 100-126, but coded without the first digit ("1"). These characters are thus coded with numbers 0-26. In consequence all characters in the modified ASCII code are coded with only two digits. Because of its allowable length of max. 300 characters (equivalent to 600 digits of the modified ASCII code) the chat text can be divided into several USSD messages which are sent in a sequence, after reception of feedback message from the traffic operator confirming reception of previous message. On the other hand the messages sent by the traffic operator are not limited by the requirements of the operation system implemented in the mobile operator station (e.g. operation system Android accepts in the USSD message only digits and signs: plus +, asterisk * and hash or number sign #). Then it is not necessary to convert the text in the "chat" mode into ASCII code and the number of characters in the message can be higher.

The mobile operator station has a modality of sending images, sound and short movies which evidence the events that took place in transportation. The MMS format is used for this task. With MMS format the mobile station has no need to initiate GPRS session which can be used for other tasks instead.

The proposed system provides the traffic operator with complete track&trace of the transportation means and the transported goods in real-time, and with continuous monitoring of the key parameters of the load and of the vehicle.

## Claims

1. A communication system for exchange of messages between one or more mobile operators and at least one traffic operator **characterised in that** it contains at least one traffic operator station (TOS1, TOS2...) provided with means for sending and/or receiving data with use of USSD protocol, and at least one mobile operator station (MOS1, MOS2...) provided with means for sending and/or receiving data with use of USSD protocol, and where each traffic operator station and each mobile operator station are provided with means for generation, reception, processing and visualisation of information carried in pre-defined sub-strings of characters contained in the strings of characters that constitute the USSD-compliant messages.

2. The system according to claim 1 **characterised in that** each traffic operator station and each mobile operator station is provided with means for selection of the recipient of the USSD-compliant message from the list of the traffic operator stations and the mobile operator stations.

3. The system according to claim 1 or 2 **characterised in that** the traffic operator station and the mobile operator station exchange the USSD-compliant messages through the cellular network with implemented GSM (2G), and/or UMTS (3G) and/or LTE Advanced (4G) standard, or any other standard supporting USSD protocol.

4. The system according to claim 1 or 2 or 3 **characterised in that** the traffic operator station and the mobile operator station exchange the USSD-compliant messages through the satellite network.

5. The system according to any of preceding claims **characterised in that** the mobile operator station is a mobile phone, in particular a smartphone, or a notebook, or a netbook, or a tablet, or any other mobile electronic device provided with a SIM card or circuit and a modem or any other suitable electronic device controlling the SIM card or circuit.

6. The system according to any of preceding claims **characterised in that** the mobile operator station is assigned to the vehicle and **in that** the vehicle identification number is comprised in the USSD-compliant message sent by the mobile operator station to the traffic operator station.

7. The system according to any of preceding claims **characterised in that** the mobile operator station is provided with the receiver of the geographic positioning signal, preferably integral with the mobile operator station.

8. The system according to any of preceding claims **characterised in that** at least one sensor of a physical variable and optionally a bar code and/or matrix code reader are connected to the mobile operator station, either remotely or by wire, optionally through a local hub controlling the sensors and/or the bar/matrix code readers.

9. The system according to claim 8 **characterised in that** the sensor of a physical variable is a humidity, and/or temperature, and/or pressure, and/or velocity, and/or acceleration, and/or light intensity, and/or door-lock, and/or fuel level, and/or engine revolutions, and/or engine-stop sensor.

10. The system according to any of preceding claims **characterised in that** in pre-defined temporal or spatial intervals the mobile operator station sends automatically the USSD-compliant message to the traffic operator station.

11. The system according to claim 10 **characterised in that** the USSD-compliant message contains the geographical coordinates acquired by the mobile operator station from the geographic positioning signal receiver or from the current BTS and VLR of the SIM card or circuit, and optionally it contains the values of one or more physical variables acquired by the mobile operator station from one or more sensors of the physical variables, and optionally the code acquired by the mobile operator station from the bar code and/or matrix code reader.

12. The system according to any of preceding claims **characterised in that** at a moment of time chosen by the mobile operator the mobile operator station sends to the traffic operator station the USSD-compliant message containing the data describing current status of the mobile operator, the vehicle, or the load, and optionally other data, preferably sound, images or movies, preferably in MMS format.

13. The system according to any of preceding claims **characterised in that** the traffic operator station sends to selected mobile operator station the USSD-compliant message, either at pre-defined time intervals, or at any moment of time selected by the traffic operator, or automatically to confirm reception of the USSD-compliant message from the mobile operator station.

14. The system according to any of preceding claims **characterised in that** the mobile operator station and/or the traffic operator station which is either stationary or mobile are provided with a communication interface for generation and visualisation of the USSD-compliant messages.

15. The system according to claim 14 **characterised in that** the communication interface has icons and buttons for generation and visualisation of information comprised in the USSD-compliant messages, in particular of current status of the vehicle and/or the load, or for switching to other statuses, or for switching into other modes of communication, like chat, phone call, SMS or MMS.
